# EUROPEAN PATENT SPECIFICATION

(11) **EP 1 539 370 B1**
(45) Date of publication and mention of the grant of the patent: **24.05.2006**
(21) Application number: 03764487.9
(22) Date of filing: 11.07.2003
(51) Int. Cl.: B05B 15/04, B29C 59/02

(54) **PATTERNED POLYMER ARTICLES, APPARATUS AND METHOD OF PRODUCING THE SAME**
GEMUSTERTE POLYMERARTIKEL, APPARAT UND METHODE ZU DEREN HERSTELLUNG
ARTICLES POLYMERES STRUCTURES, DISPOSITIF ET PROCEDE DE FABRICATION DE CEUX-CI

(30) Priority: 13.07.2002 GB 0216373; 02.07.2003 GB 0315433
(43) Date of publication of application: 15.06.2005
(73) Proprietor: 3M Innovative Properties Company, St. Paul, MN 55133-3427 (US)
(72) Inventor: BOUIC, Phillip J.,, Saint Paul, MN 55133-3427 (US); DOUGLAS, Malcolm F.,, Saint Paul, MN 55133-3427 (US); HAGEDORN, Martyn V.,, Saint Paul, MN 55133-3427 (US)
(74) Representative: Wightman, David Alexander
(86) International application number: PCT/US2003/021689
(87) International publication number: WO 2004/007088

(56) References cited:
- EP-A- 0 365 442
- EP-A- 1 025 911
- WO-A-93/22149
- WO-A-99/52646
- PATENT ABSTRACTS OF JAPAN vol. 2000, no. 08, 6 October 2000 (2000-10-06) -& JP 2000 140724 A (YOSHINO KASEI KK), 23 May 2000 (2000-05-23)

## Description

### Field

This invention concerns improvements in or relating to polymer articles. More especially, the invention relates to polymeric foam articles and a method of manufacturing polymeric foam articles with a surface pattern applied to an area of the article. The invention has particular, but not exclusive, application to such foam articles for use as masking materials when painting a vehicle.

### Background

WO 93/22149 discloses a process for producing decorative articles of polystyrene foam by forming a block of blown polystyrene beads, cutting individual strip- or slab-shaped blanks from the block with a visible cut of the polystyrene beads at the cut surface, and decorating the cut surface by forming under pressure and heat with a die having a relief pattern which generates the decoration and is provided with an anti-adhesive coating or parting agent before pressing.

WO09952646 discloses a foam strip for use as a masking material to close a gap between two relatively movable parts, for example a vehicle door and door post, when painting the parts. The foam strip is produced by locally applying pressure to a foam web to form longitudinal seams spaced apart across the web and separating the strips from the web along the seams. A longitudinal adhesive strip is provided along the foam strips to enable the foam strip to be detachably secured in position.

In our co-pending European patent application No. 1539369 filed 13 July 2002 we disclose polymeric foam articles for use as a masking material comprising an elongate strip of foam material having a flexible web portion extending along the length of the strip and having a width trartsverse to the length of the strip wherein the web portion is formed by a shaping process in which an area of the foam material is deformed under pressure so that, when the pressure is removed, the web portion is produced in the deformed area.

We further disclose applying a surface pattern to the flexible web portion during the shaping process to provide the web portion with any desired properties of stress relief, stiffness, strength or flexibility in a particular plane or direction.

The present invention develops and extends the application of surface patterns to the masking materials disclosed in our afore-mentioned application to foam articles generally.

At least some embodiments provide surface patterns for a range of uses both functional and decorative as well as methods of forming the surface patterns.

### Summary

According to a first aspect of the present invention there is provided a polymer foam article as defined in claim 1.

The shaping process may be applied to an open or closed cell polymer material to compress and fuse the cells together. The shaping process may result in complete or partial compression and fusing of the cells together. The shaping process may result in the compression and fusing of the cells being permanent so as to retain and maintain the desired shape of the article. Alternatively, the compression and fusing of the cells may be semi-permanent so that the desired shape of the article is retained and maintained for a period of time after which the article reverts to its original or substantially original shape. For example, we may use a semi-permanent shape to indicate the useable life of an article.

Depending on the material of the article and the pressure applied, the deformation of the material may be sufficient to cause the material to retain the desired shape without any additional energy input during the shaping process. In some case, however, the shaping process may be enhanced by providing an additional input of energy to assist in retaining the desired shape of the article when the pressure is removed. This may be achieved in a variety of ways. For example by increasing the pressure applied to deform the material, or by the application of heat to the material or by other means such as electromagnetic radiation or ultrasonics.

The surface pattern may be functional to provide the article with desired properties or decorative to enhance the aesthetics of the article or a combination of both.

In one embodiment, the surface pattern may modify the physical properties of the area to which it is applied. For example, the surface pattern may include formations such as ribs arranged to provide stress relief or alter the stiffness, strength or flexibility of the shaped area.

In another embodiment, the surface pattern may provide or include a visual display of information. For example the information may be in the form of indicia such as letters, numerals, symbols or pictures applied to the shaped area. Such information may identify the article and/or the manufacturer providing the end user with information identifying genuine articles. Alternatively or additionally, the information may provide instructions for use of the article.

Advantageously, the surface pattern is applied during the shaping process. For example, formers such as shaping dies and/or cutting blades may be provided with a contact surface adapted to provide the desired surface pattern in the compressed polymeric material. By applying the surface pattern in this way, the pattern cannot be easily removed, defaced or altered without such changes being visibly obvious.

The surface pattern may be provided on one or both sides of the shaped area. Where the surface pattern is applied to one side during the shaping process, the reverse of the surface pattern is formed on the opposite side. Thus, we may shape an area of the article in the nip between a pair of rollers having a surface pattern applied to the surface of one or both rollers, for example etched in the surface of the roller.

We may apply a surface pattern to each side during the shaping process and offset the patterns so that the reverse pattern does not interfere with the pattern applied to the opposite side. Alternatively, we may apply surface patterns to both sides so that the reverse pattern overlaps with the pattern applied to the opposite side.

Where we apply surface patterns to both sides that are offset so as not to interfere with each other, the patterns may be the same or different and may be offset in the longitudinal direction of the article. For example we may apply a decorative pattern to one side and information to the other side.

Where we apply surface patterns to both sides that overlap, the patterns may co-operate to produce a combined surface pattern on both sides that may be decorative and/or provide information.

The surface pattern may have the same surface finish, for example colour, texture, as the adjacent polymeric material. Alternatively, the surface pattern may have a different surface finish. For example, the surface pattern may be of a contrasting colour or texture. In this way, the visibility of the surface pattern can be enhanced. This may be especially useful where the surface pattern is employed to provide information to the end user.

In one arrangement, the part of the contact surface forming the surface pattern may be provided with colouring material that is transferred to the polymer material where the surface pattern is formed. Alternatively or additionally, it may be provided with a different surface finish (texture) that is imparted to the polymer material where the surface pattern is formed.

Preferably, the article is made of polymeric foam material, for example an open or closed cell polymeric foam that can be formed to a desired shape under pressure. Foams having a density in the range of from 20 to 30 Kg.m³ are typically found to be suitable and include polyurethane, polyolefin, polyester or like foam materials.

In one embodiment, the shaped area is of reduced thickness relative to an adjacent area of the article. Where the article is in the form of an elongate strip for use as a masking material, the shaped area may extend along the length of the strip and may be continuous or discontinuous.

The shaped area may provide the article with desired properties for the intended application of the article. Thus, the shaped area may form a hinge portion extending along the length of an elongate strip to be used as a masking material such that an adjacent portion of the strip can hinge relative to the shaped area.

Alternatively or additionally, the shaped area may provide a tab by means of which the article can be gripped to assist handling the article in use. Where the article is in the form of an elongate strip for use as a masking material, the tab may be continuous along the length of the strip or a series of tabs may be provided spaced apart along the length of the strip.

The shaped area may include a seam formed by completely compressing and fusing the cells together. The seam may be continuous or discontinuous along the length of the article. The seam provides a line of weakness that may be of linear, curved or other suitable configuration to allow adjoining areas either side of the seam to be separated along the seam. For example, two or more articles may be formed together and releasably secured to each other by a seam allowing the articles to be separated from each other. Alternatively, where a tab is provided this may be connected to the article by a seam allowing the tab to removed after the article has been secured in place.

The polymer material may be a natural or synthetic polymer. Synthetic polymers may include polyesters, polyurethanes and polyolefins. Natural polymers may include polyoses such as cellulose. Preferred polymer materials are foams but other materials including elastomers, thermoplastics and non-woven materials capable of being shaped under pressure may be used. The polymer material may be a combination of two or more polymer materials.

According to a second aspect of the present invention, there is provided a method of making an article of polymer material as defined in claim 19.

Preferably, the surface pattern is formed during the shaping process to compress the polymer material. The surface pattern may be inset below the adjacent surface of the shaped area. Alternatively, the surface pattern is raised above the adjacent surface of the shaped area. For example a shaping die forming the shaped area may be provided with a contact surface in which the surface pattern is raised above or inset below the contact surface.

According to a third aspect of the present invention, there is provided apparatus for manufacturing an article of polymer material as defined in claim 17.

The compression means may comprise a former such as a shaping die or blade having a contact surface for forming the area of reduced thickness by compressing the polymer material. The surface pattern applying means may comprise a portion of the contact surface in which the surface pattern is provided. In this way, the surface pattern is formed as an integral part of the compressed area.

These and other features, benefits and advantages of the invention will be more fully understood from the description hereinafter of exemplary embodiments of articles according to the invention and methods and apparatus for making such articles.

### Brief Desertption of the Drawings

**Figure 1** shows a diagrammatic cross-section of a foam article for use as a masking material disclosed in our co-pending European application No. 1539369;
**Figure 2** shows a method and apparatus for making the foam article shown in Figure 1;
**Figure 3** shows an adhesive delivery system for use with the method and apparatus of Figure 2;
**Figure 4** shows application of the foam article of Figure 1 as a masking material for masking a gap between two parts of a vehicle;
**Figures 5 to 14** show alternative patterned contact surfaces for applying surface patterns to the connecting web of the foam article shown in Figure 1 using the method and apparatus of Figure 2, wherein the contact surfaces in Figures 8 to 14 are of enlarged scale compared to the contact surfaces in Figures 5 to 7;
**Figure 15** shows a diagrammatic perspective view of another foam article for use as a masking material according to the present invention;
**Figure 16** is a section on the line 16-16 of Figure 15;
**Figure 17** is a section on the line 17-17 of Figure 15;
**Figure 18** shows a diagrammatic perspective view of yet another foam article for use as a masking material according to the present invention;
**Figure 19** is an end view of the foam article shown in Figure 18;
**Figure 20** is an end view of the foam article shown in Figure 18 with the cord and tab separated;
**Figure 21** shows a diagrammatic perspective view of a still further foam article for use as a masking material according to the present invention;
**Figure 22** is a section on the line 22-22 of Figure 21;
**Figure 23** is a section on the line 23-23 of Figure 21;
**Figure 24** shows a diagrammatic perspective view of a foam article for use as a packing material according to the present invention;
**Figure 25** is a section on the line 25-25 of Figure 24;
**Figure 26** is a section on the line 26-26 of Figure 24; and
**Figure 27** shows a diagrammatic perspective view of a foam article for use as adhesive backed tape according to the present invention.

### Detailed Description

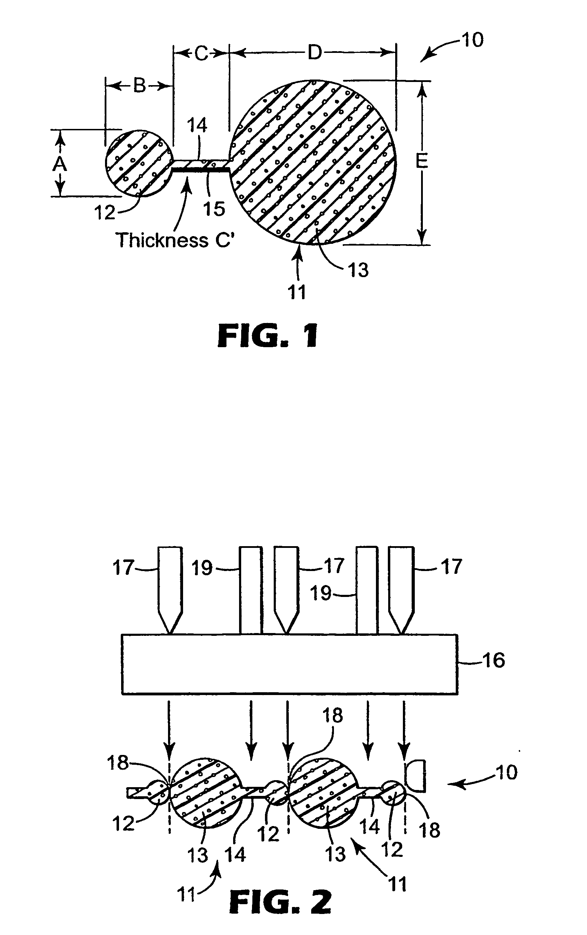

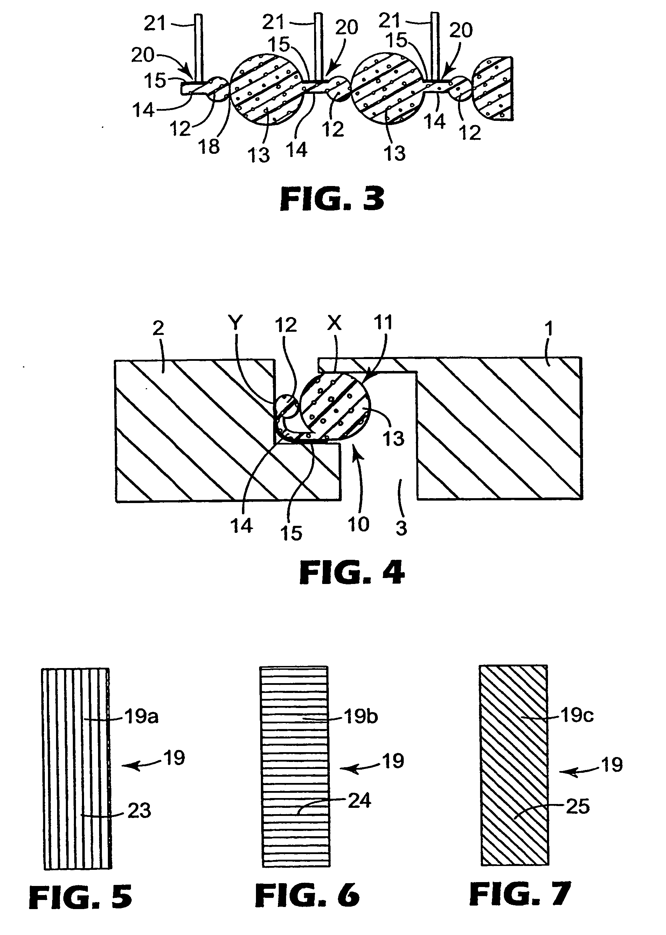

There is shown in Figures 1 to 3 a foam article 10 and apparatus for making the foam article 10 as disclosed in our co-pending European patent application No. 1539369. The article 10 is for use as a masking material between two parts of a vehicle when the vehicle is spray painted as shown in Figure 4.

As shown in Figure 1, the foam article 10 comprises an elongate foam strip 11 having two lobes 12, 13 of elliptical cross-section connected by an integral web 14. Each lobe 12, 13 has a major axis transverse to the length of the foam strip 11 and the connecting web 14 is aligned with the major axis of each lobe 12, 13.

In this embodiment the lobes 12, 13 are of different cross-section and the thickness of the web 14 transverse to the length of the foam strip 11 is less than the thickness of both lobes 12, 13 transverse to the length of the foam strip 11. It will be understood, however, that this is not essential and that the lobes 12, 13 and connecting web 14 can be of different shapes as disclosed in our aforementioned co-pending UK patent application.

Suitable dimensions for the foam article 10 are given in Table 1 for masking gaps of varying size and shape commonly found in automotive vehicles, especially cars, in different locations, for example between a front or rear door, or hood or trunk or tailgate and the adjacent vehicle body.

**Table 1**

| A B C (Thickness) | (Width) | (Width) | C' (Thickness) | D (Width) | E (Thickness) |
|---|---|---|---|---|---|
| 4.5mm | 4.5mm | 3.5mm | 1mm | 13.5mm | 12mm |

It will be understood these dimensions are given by way of non-limiting example only and any dimension may be altered according to the particular requirement for any given application of the foam strip 11.

The foam strip 11 may be made from any suitable polymeric foam material. Preferred foam materials are polyesters or polyurethanes or polyolefins but it will be appreciated that other foam materials may be used as will be familiar to those skilled in the art.

In this embodiment, the foam strip 11 is a polyester or polyurethane foam. A suitable foam is available from Caligen Foam Limited under the trade designation "X4200AM" although it will be understood that other foam materials may be used.

The foam strip 11 is provided with a longitudinally extending adhesive stripe 15 on one side of the web 14 by means of which the foam strip 11 can be releasably secured in position. In other embodiments (not shown), the adhesive stripe may extend onto part or all of the lobe 13. The adhesive stripe 15 may be a pressure sensitive adhesive such as a hot melt rubber adhesive applied by any suitable means, for example die coating.

In this embodiment, the adhesive stripe 15 is applied across the full width of the web 14 but it will be appreciated that this is not essential and the adhesive stripe 15 may be applied across part of the width of the web 14. The adhesive stripe 15 may also be continuous or discontinuous in the longitudinal direction provided that the foam strip 11 is effectively anchored in position to permit the lobes 12,13 to move independently without motion of one lobe causing motion of the other lobe.

The method and apparatus for forming the foam article 10 of Figure 1 will now be described with reference to Figures 2 and 3 starting from a flat sheet 16 of foam.

As shown in Figure 2, the foam sheet 16 is provided with a plurality of uniformly spaced, parallel, seams 18 extending longitudinally of the foam sheet 16 by the application of pressure via a plurality of laterally spaced blades 17. The blades 17 have blunt ends approximately 0.5 mm wide that compress the foam so that the upper and lower surfaces fuse together along the seams 18 and prevent the foam returning to its original shape on removal of the pressure.

The foam sheet 16 is also compressed between the seams 18 to form the webs 14 by the application of pressure via a plurality of flat blades 19. One blade 19 is provided between each pair of blades 17 and is offset towards one of the blades 17. The ends of the blades 19 are wider than the blades 17 and they only partially compress an area of the foam sheet 16 between the seams 18 so that the foam material is prevented from returning to its original shape on removal of the pressure.

In this way, the desired shape of the foam article 10 having two elliptical lobes 12, 13 of different transverse cross-section connected by the flat web 14 is produced. The foam sheet 16 is separable along the seams 18 to form individual foam strips 11.

The stripe 15 of pressure sensitive adhesive can be applied to the web 14 before or after separating the foam strips 11 along the seams 18 by a suitable adhesive delivery system such as that shown diagrammatically in Figure 3. The system comprises a plurality of separate, individual dies 20 positioned above the connecting webs 14 of the foam strips 11. The dies 20 are supplied with adhesive from a remote source (not shown) via separate flow channels 21 and apply the adhesive stripes 15 to the connecting webs 14 of the foam strips 11.

The foam strips 11 can be stored and supplied in rolls of pre-determined length wound on itself or a core (not shown) from which the end user can unwind and separate a required length. More than one foam strip 11 may be wound on a common core either separately or joined together by the seams 18 and manually separated by the end user when unwinding a desired length of the foam strip 11.

As will be appreciated, the relative size of the lobes 12, 13 is determined by the offset of the flat blades 19 between the blades 17 and can be varied to provide any desired shape of foam article 14. The spacing of the lobes 12, 13 can also be altered by changing the width of the flat blades 19.

In the above method, the foam sheet 16 is compressed by the blades 17, 19 while the foam sheet 16 is stationary and the foam sheet 16 is formed to the required shape in a series of steps by advancing the sheet 16 between forming operations to present a new area of the sheet 16 to be shaped. In another method (not shown), the blades 17, 19 are replaced by rotatable discs and the foam sheet 16 is formed to the required shape in a continuous manner by feeding the sheet 16 past the discs.

Referring now to Figure 4, the foam strip 11 is shown masking the gap 3 between the door 1 and post 2 of a vehicle when the vehicle is spray painted. The foam strip 11 is secured to the base face of the post 2 by means of the adhesive stripe 15 so that an adhesive free surface of the smaller lobe 12 contacts the side face of the post 2 at point Y.

The larger lobe 13 is folded upwards by contact with the base face of the post 2 so that an adhesive free surface of the lobe 13 contacts the inside face of the door 1 at point X when the door 1 is closed. In this way, the gap 3 is closed to prevent paint passing through the gap 3 when the vehicle is spray painted.

As will be understood, the web 14 permits the lobes 12, 13 to move independently of each other so that forces applied to the lobe 13 by the door 1 are not transferred to the lobe 12.

In this way, the adhesive free contact between the lobe 12 and the side face of the post 2 is unaffected by compression of the lobe 13 and the adhesive stripe 15 is concealed preventing formation of a hard edge when the vehicle is spray painted.

Furthermore, the foam strip 11 can adapt to close gaps 3 of different size and/or shape by hinging movement of the lobe 13 about the web 14 and this movement does not cause the position of the lobe 12 to change.

Accordingly, there is no tendency for the lobe 12 to lift off the side face of the post 2 to expose the adhesive stripe 15 when the door 1 is closed.

In this way, a soft edge is formed at the interface between the unmasked surface of the post 2 and the adhesive free surface extending lengthwise of the strip where the edge of the lobe 12 contacts the side face of the post 2 at point Y.

A soft edge is also formed at the interface between the unmasked surface of the door 1 and the adhesive free surface extending lengthwise of the strip where the edge of the lobe 13 contacts the inner face of the door 1 at point X.

As will be understood, the function of filling the gap 3 to prevent paint passing through the gap 3 is performed by engagement of the lobes 12, 13 with faces of the post 2 and door 1.

Moreover, the foam strip 11 can adapt to fill gaps 3 of different size and shape independently of the edge forming function performed by each lobe 12, 13 where it contacts the face of the post 2 and door 1.

As a result, soft edges can be formed between painted and masked areas on both the post 2 and door 1.

In this embodiment, the lobe 12 provides an adhesive free region that extend lengthwise of the strip on one side of the adhesive stripe 15 and has a transverse width of 4.5mm (Table 1).

We have found that the adhesive free region can be of narrower width without exposing the adhesive stripe 15 and, in general, a width of 2mm may be sufficient to maintain contact between an adhesive free surface of the lobe 12 and the part to which the strip is anchored by the adhesive strip.

The connecting web 14 may have a flat surface formed by compressing the foam material with blades 19 having a smooth contact surface. More preferably, in accordance with the present invention, the connecting web 14 has a surface pattern formed by compressing the foam material with blades having a patterned contact surface. In this way, the surface pattern applied to the connecting web 14 is formed integrally from the foam material during the shaping process. As a result, the surface pattern cannot be removed or altered without defacing the article so as to be readily apparent to a user of the article.

The surface pattern may be decorative. For example, the surface pattern may provide the connecting web 14 with a visually distinctive appearance so as to enhance the aesthetics of the article 11. Alternatively or additionally, the surface pattern may be functional. For example, the surface pattern may modify the physical properties or characteristics of the connecting web 14 to adapt the article 11 for a particular application. Alternatively, the surface pattern may provide a visual indication of information identifying the article or its source or its use. For example the surface pattern may comprise indicia applied to the connecting web 14. The indicia may be letters, numerals, symbols or pictures in the form of text or graphics.

The surface pattern may be inset (recessed) into the surface of the connecting web 14 by providing a raised (elevated) pattern on the contact surface of the blades 19. Alternatively, the surface pattern may be raised (elevated) above the surface of the connecting web 14 by providing an inset (recessed) pattern in the contact surface of the blades 19.

The contact surface of the blades 19 may be provided with colouring material that is transferred to the foam of the connecting web 14 so that the surface pattern on the web 14 has a contrasting colour to that of the remainder of the web 14. In this way, the visual appearance of the surface pattern is enhanced.

Alternatively or additionally, the visual appearance of the surface pattern may be enhanced by providing the contact surface of the blades 19 that forms the surface pattern with a different surface finish such that the resulting surface pattern has a different surface finish, for example texture, relative to the surface finish of the adjacent surface of the web 14.

Referring now to Figures 5 to 14, these show examples of the contact surfaces of blades 19 that can be employed to apply a surface pattern having a decorative and/or functional nature to the connecting web 14.

Figure 5 shows a blade 19 having a contact surface 19a with an array of recessed notches 23 that form a plurality of raised parallel ribs extending in the longitudinal direction of the foam strip 11 that increase bending of the web 14 in this direction.

Figure 6 shows a blade 19 having a contact surface 19b with an array of recessed notches 24 that form a plurality of raised parallel ribs extending transversely to the longitudinal direction of the foam strip 11 that increase stiffness of the web 14 against bending in this direction.

Figure 7 shows a blade 19 having a contact surface 19c with an array of recessed notches 25 that form a plurality of raised parallel ribs extending at an angle of between 0° and 90° to the longitudinal direction of the foam strip 11 that modify the bending and stiffness properties of the connecting web 14.

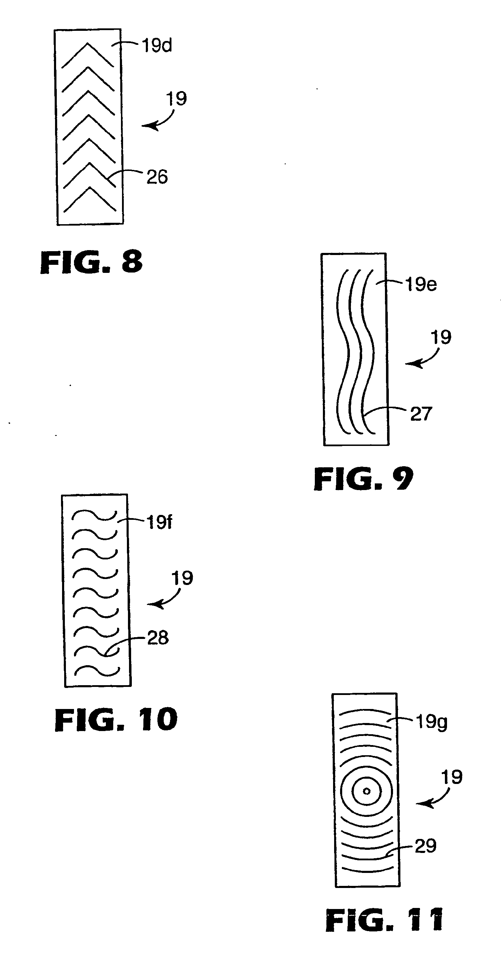

Figure 8 shows a blade 19 having a contact surface 19d with an array of recessed notches 26 that form a plurality of raised chevrons that extend in the longitudinal direction of the foam strip 11 that modify the bending and stiffness properties of the connecting web 14.

Figure 9 shows a blade 19 having a contact surface 19e with an array of recessed notches 27 that form a plurality of raised wavy ribs extending in the longitudinal direction of the foam strip 11 that modify the bending and stiffness properties of the connecting web 14.

Figure 10 shows a blade 19 having a contact surface 19f with an array of recessed notches 28 that form a plurality of raised wavy ribs extending transversely to the longitudinal direction of the foam strip 11 that modify the bending and stiffness properties of the connecting web 14.

As will be appreciated, each of the contact surfaces 19a to 19f provide the connecting web 14 with a surface pattern that modifies the physical properties of the web 14 i.e. is functional and that can also provide the connecting web 14 with an aesthetically pleasing appearance i.e. is decorative.

The blades 19 may be arranged so that the surface pattern provided by each of the contact surfaces 19a to 19f is substantially continuous in the longitudinal direction of the strip 11. Alternatively, the blades 19 may have contact surfaces 19a to 19f arranged so that the surface pattern is discontinuous in the longitudinal direction with breaks or gaps in the surface pattern in the longitudinal direction being provided at regular or irregular intervals. The breaks or gaps may be provided with an alternative form of marking as described below.

It will also be understood that the surface patterns produced by the contact surfaces 19a to 19f are exemplary only of the invention and that blades 19 having other shapes and configurations of recessed notches in the contact surface may be employed to provide any desired surface pattern on the connecting web 14. For example, Figure 11 shows a blade 19 with a contact surface 19g having an array of recessed notches 29 that form a decorative surface pattern of raised circular ribs that is repeated in the longitudinal direction of the foam strip 11.

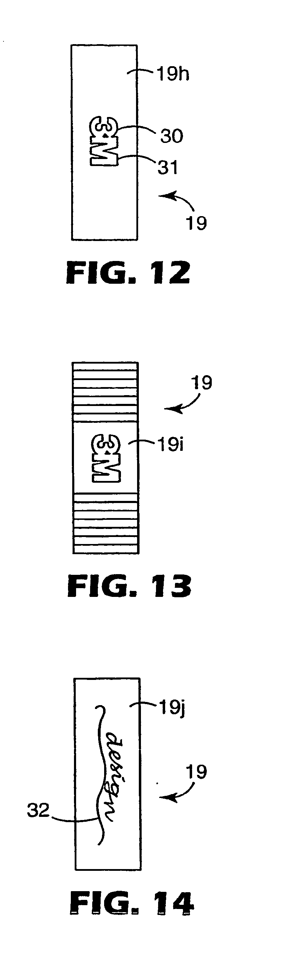

Referring now to Figures 12 to 14, these show examples of the contact surfaces of blades 19 that can be employed to apply a surface pattern to the connecting web 14 in the form of indicia so as to provide the user with information relating to the article. For example to identify the article or its source or its use.

Figure 12 shows a blade 19 having a contact surface 19h provided with recessed notches 30, 31 that form the raised numeral "3" and the raised letter "M" arranged to apply the marking "3M" to the connecting web 14 to identify the manufacturer of the strip 11.

The marking "3M" is repeated at spaced intervals in the longitudinal direction of the strip 11 and the surface area of the connecting web 14 between such markings may be plain or provided with a surface pattern such as any of the patterns shown in Figures 5 to 11. Figure 13 shows a blade 19 having a contact surface 19i combining the recessed notches 24 of Figure 6 with the recessed notches 30,31 shown in Figure 12 to provide the connecting web with the marking "3M" alternating with transverse ribs in the longitudinal direction of the foam strip.

It will be understood that any combination of letters and/or numbers may be employed to identify the article, for example a product code and/or the source, for example manufacturer. It will also be understood that the marking may consist of letters and/or numbers arranged to provide instructions for the use of the article.

Figure 14 shows a blade 19 having a contact surface 19j provided with recessed notches 32 that form a symbol or picture on the connecting web 14 that is repeated at spaced intervals in the longitudinal direction of the strip 11. Again the symbol or picture may be combined with any of the other forms of surface pattern described herein.

Each of the contact surfaces 19a to 19j of the blades 19 shown in Figures 5 to 14 applies a surface pattern to one side of the compressed area and the reverse of the surface pattern is formed simultaneously on the opposite side. We may arrange for surface patterns to be applied to both sides of the compressed area and to offset the surface patterns so that the reverse patterns so formed do not interfere with the surface patterns. This may be desirable where the surface pattern includes information in the form of letters and/or numerals. Offset surface patterns applied to both sides of the compressed area may be the same or different.

In another embodiment (not shown), we may arrange for surface patterns applied to both sides of the compressed area to overlap so that the patterns co-operate to produce a desired combined pattern on both sides.

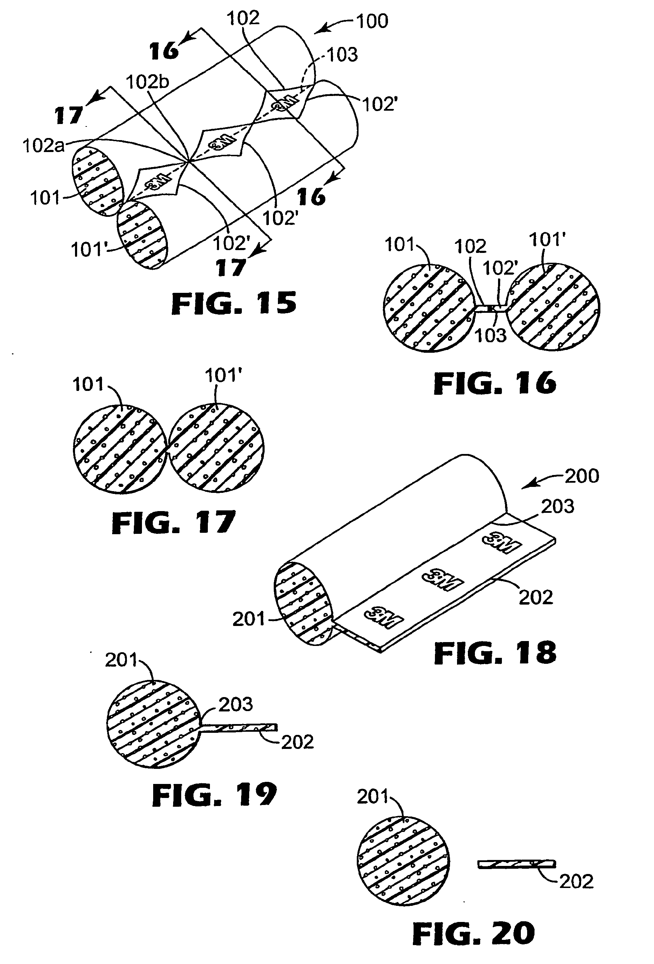

Referring now to Figures 15 to 17 there is a second embodiment of a foam article 100 according to the present invention.

The foam article 100 comprises two elongate cords 101,101' of generally circular cross-section joined together by a series of compressed areas 102 of approximately diamond shape. The compressed areas 102 are arranged so that adjacent areas 102 in the longitudinal direction contact each other at the apices 102a, 102b. As shown, each of the compressed areas 102 is provided with marking "3M" to identify the manufacturer of the article 100. It will be understood that the compressed areas 102 may be provided with any other form of surface marking as described previously.

The article 100 may be produced by compressing a flat sheet of foam with a rotating blade (not shown) having a peripheral surface formed with diamond shaped formations joined at the apices in the circumferential direction with recesses corresponding to the indicia to be applied to the article 100 provided in the diamond shaped formations.

The article 100 may be provided with a seam 103 (shown in outline in Figure 15) by means of which the cords 101, 101' may be separated so that the compressed areas 102 are split in half and form a respective series of triangular shaped compressed areas 102, 102' in the longitudinal direction of each cord 101, 101'. Alternatively, the cords 101, 101' may be separated with scissors.

The cords 101, 101' may be used as masking materials to mask a gap between two parts of a vehicle when the vehicle is being spray painted. The cords 101, 101' are secured in place by means of a longitudinal adhesive strip (not shown) applied to each cord 101, 101' and the compressed areas 102, 102' provide tabs for the user to hold the cords 101, 101' to assist positioning and securing the cords 101, 101' accurately.

With reference now to Figures 18 to 20, there is shown a third embodiment of a foam article 200 according to the present invention.

The foam article 200 comprises a cord 201 of generally circular cross-section for use as a masking material to mask a gap between two parts of a vehicle when the vehicle is being spray painted. The cord 201 is provided with a longitudinal flange 202 formed by compressing the foam material and with a longitudinal adhesive stripe (not shown) for securing the cord 241 in use. The flange 202 provides a tab to assist the user position and secure the cord 201 in use and is connected to the cord 201 by a seam 203 so as to be separable from the cord 201 when the cord 201 is secured in position (Figure 20). Alternatively, the flange 202 may be left in place to assist masking the gap.

As shown, the flange 202 is provided with a series of markings "3M" spaced apart along the length of the cord 201 to identify the manufacturer of the article 200. It will be understood that the compressed areas 202 may be provided with any other form of surface pattern as described previously.

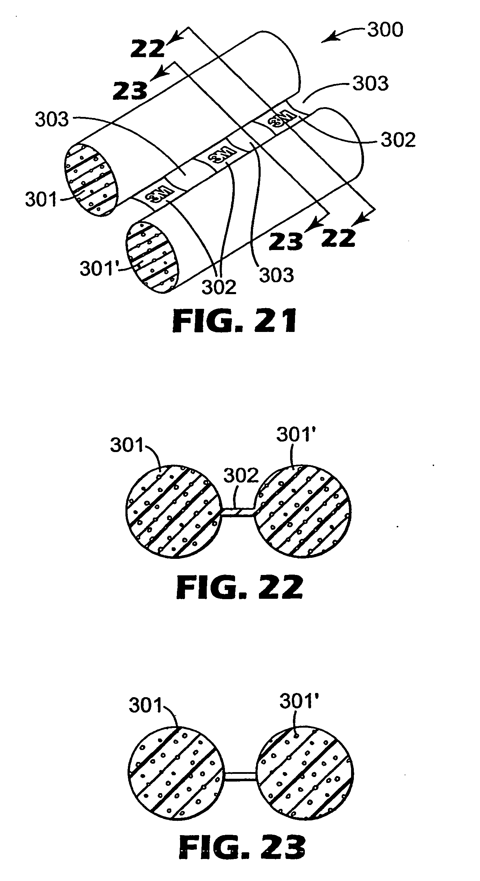

Referring now to Figures 21 to 23 there is shown a fourth embodiment of a foam article 300 according to the present invention.

The foam article 300 comprises two elongate cords 301,301' of generally circular cross-section joined together by a series of compressed areas or webs 302. The compressed areas 302 are spaced apart in the longitudinal direction by cut out areas 303 formed during the shaping process. As shown, each of the compressed areas 302 is provided with marking "3M" to identify the manufacturer of the article 300. It will be understood that the compressed areas 302 may be provided with any other form of surface marking as described previously.

The article 300 may be produced by compressing a flat sheet of foam with a rotating blade (not shown) having a peripheral surface shaped to form the compressed areas 302 and cut-out areas 303.

The cords 301, 301' may be separated by cutting through the compressed areas 302 to leave each cord 301, 301' with a series of tabs that can be used to assist positioning the cords 301, 301' when used as masking materials to mask a gap between two parts of a vehicle during spray painting as described previously. For such application the cords 301, 301' are provided with a longitudinal adhesive stripe (not shown) to secure the cords 301, 301' in position.

As will now be appreciated, the present invention provides articles of compressible polymer material with a surface pattern applied to an area of the material that has been shaped under pressure so as to retain a desired shape when the pressure is removed. The pattern can be decorative and/or functional and may be formed simultaneously with the shaping process by appropriate construction of the contact surface of the former employed to compress the polymer material.

Alternatively, the pattern may be applied to the area in a separate operation, for example by laser cutting or any suitable technique before or after the shaping operation. A separate forming operation may be used to apply the surface pattern to one or both sides of the shaped area. Where the pattern is applied to one side, the other side may be plain. Where the pattern is applied to both sides, the patterns may be the same or different and may be aligned or offset.

Although the invention has been described with particular reference to articles made of polymeric foam suitable for use as masking materials when spray painting a vehicle, it will be understood that the invention is not limited to such application and that the invention can be applied to other articles made of polymeric foam that can be shaped under pressure so as to retain a desired shape when the pressure is removed.

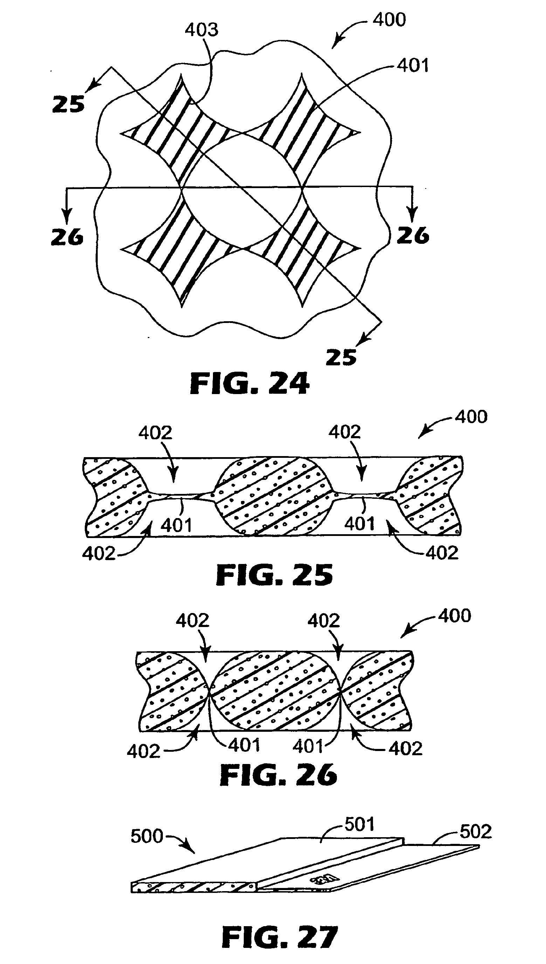

For example, with reference to Figures 24 to 26, there is shown application of the invention to an article 400 suitable for use as packaging for eggs or similar fragile items (not shown). As shown a sheet of foam is compressed to provide a plurality of areas 401 of generally star shape aligned in two mutually perpendicular directions to produce a convoluted surface in which each compressed area 401 forms a recess or pocket 402 in the foam sheet to receive an egg.

The areas 401 are produced by compressing the foam sheet with formers (not shown) having contact surfaces corresponding to the star shape of the areas 401. In this embodiment, the contact surfaces are formed with recessed notches that provide the areas with a surface pattern in the form of raised parallel ribs 403. It will be understood, however, that the areas 401 can be provided with any other surface pattern of decorative and/or functional nature as described herein. The article 400 is also suitable for other uses such as a sound proofing or sound deadening material in a variety of applications.

Referring now to Figure 27, there is shown application of the invention to an article 500 comprising a foam backed pressure sensitive adhesive tape 501 provided along one side edge with a flange 502 to which a surface pattern comprising the marking "3M" is applied as previously described herein. The flange 502 is formed by compressing an area of foam so as to retain the desired shape of the flange 502 when the pressure is removed. It will be understood that any other surface pattern of a decorative and/or functional nature as described herein may be applied to the flange 502. The flange 502 may be attached via a seam that allows the flange 502 to be separated from the tape 501 if desired.

In the above-described embodiments, an area of the article is deformed under pressure so as to retain a desired shape when the pressure applied to the area is removed. Depending on the material of the article and the pressure applied, the deformation of the material may be sufficient to cause the material to retain the desired shape without any additional energy input. For example, the applied pressure to deform the material may set the material and prevent it returning to its original shape. In some case, however, it may be desirable or necessary to provide an additional input of energy to assist in retaining the desired shape of the article when the pressure is removed. This may be achieved in a variety of ways to enhance or optimise the shaping process. For example by applying a higher pressure to the material than is required to deform it, or by the application of heat to the material or by other means such as electromagnetic radiation or ultrasonics. Heat may be applied by changing the ambient temperature or by heating the formers used to shape the material or in any other suitable manner. Any one or more of these means for inputting additional energy may be employed separately or in combination.

It will be understood that the above-described examples are intended to illustrate the diverse range and application of the invention and that features of the embodiments may be used separately or in combination with any other feature of the same or different embodiments to produce an article with a surface pattern applied to an area of the article that has been compressed so as to retain a desired shape when the pressure is removed.

Thus, it will be appreciated that the invention has general application to any article made of compressible polymer material, especially foam articles, to which a decorative and/or functional surface pattern may be applied to a compressed area for any desired purpose. For example, the invention may be applied to headliners for cars, carpet underlay and other articles to which a surface pattern can be usefully applied.

Moreover, while the specific materials and/or configuration of the articles described and illustrated are believed to represent the best means currently known to the applicant for producing articles having a surface pattern applied to an area that has been compressed so as to retain a desired shape when the pressure is removed, it will be appreciated that the invention is not limited thereto and that various modifications and improvements can be made within the scope of the appended claims.

## Claims

1. A polymer foam article (10,100,200,300,400,500) having a surface pattern applied to the article **characterised in that** the article comprises a resiliently compressible foam wherein the surface pattern is formed when an area (14,102,202,302,402,502) of the foam is deformed under pressure to a desired shape so that, when the pressure is removed, the article is formed to the desired shape with the surface pattern produced in the deformed area (14,102,202,302,402,502).

2. A polymer article according to claim 1 wherein the surface pattern is functional.

3. A polymer article according to claim 1 wherein the surface pattern modifies a physical property of the article.

4. A polymer article according to claim 3 wherein the surface pattern modifies at least one of the stress, stiffness, strength or flexibility of the article.

5. A polymer article according to claim 2 wherein the surface pattern provides or includes a visual display of information.

6. A polymer article according to any one of the preceding claims wherein the surface pattern is applied during the shaping process with a former (19) having a contact surface (19a-19j) adapted to provide the desired surface pattern in the compressed polymer material.

7. A polymer article according to any one of the preceding claims wherein the surface pattern is raised relative to the adjacent polymer material.

8. A polymer article according to any one of the preceding claims wherein the polymeric foam has a density in the range of from 20 to 30 Kg.m³.

9. A polymer article according to any one of the preceding claims wherein the polymeric foam is selected from the group comprising polyurethane, polyolefin and polyester foam materials.

10. A polymer article according to any one of the preceding claims wherein the compressed area (14,102,202,302,402,502) provides the article with desired properties for the intended application of the article.

11. A polymer article according to claim 10 wherein the compressed area (14,102,202,302,402,502) forms a hinge portion extending along the length of an elongate strip to be used as a masking material such that an adjacent portion (12,13,101,101',201,301,301') of the strip can hinge relative to the compressed area (14,102,202,302,402).

12. A polymer article according to claim 10 wherein the compressed area (102,102';202) provides a tab (102,102';202) by means of which the article (200) can be gripped to assist handling the article in use.

13. A polymer article according to any one of the preceding claims wherein adjoining areas (102,102') are separable along the scam (103).

14. A polymer article according to any one of the preceding claims wherein two or more articles (11,11',101,101') are formed together and releasably secured to each other by a seam (18;103) allowing the articles to be separated from each other.

15. A polymer article according to any one of the preceding claims wherein a tab (202) is provided connected to the article by a seam (203) allowing the tab (202) to be removed after the article (200) has been secured in place.

16. A polymer foam article according to any of the preceding claims **characterised in that** the foam strip has an adhesive stripe (15) for releasably securing the foam strip to one of the two relatively movable parts (1,2) to close temporarily a gap (3) between the parts (1,2).

17. An apparatus for manufacturing the polymer foam article of claim 1 **characterised by** providing means (19a-19j) for compressing a resiliently compressible portion of the foam to form the article to a desired shape with a surface pattern produced in an area (14,102,202,302,402,502) of the compressed portion that is of reduced thickness when the article is formed.

18. The apparatus according to claim 17 wherein the compression means comprises a former (19) having a contact surface (19a-19j) for forming the area (14,102,202,302,402,502) of reduced thickness by compressing the polymer material.

19. A method of making an article of polymer foam material having a surface pattern applied to the article **characterised by** applying pressure to a resiliently compressible area (14,102,202,302,402,502) of the polymer foam to deform the area (14,102,202,302,402,502) to a desired shape with a surface pattern formed in the shaped area (14,102,202,302,402,502) during the shaping process and removing the pressure to form the article with the surface pattern.

20. A method according to claim 19 wherein the surface pattern is formed by compressing the polymer material so that the surface pattern is inset below or raised above the adjacent surface of the compressed area (14,102,202,302,402,502).

21. A method according to claim 19 or claim 20 wherein the surface pattern is produced by a shaping die (19) forming the compressed area (14) having a contact surface (19a-19j) in which the surface pattern is raised above or inset below the contact surface.

22. A method according to any one of claims 19 to 21 wherein the surface pattern is applied to one side of the compressed area (14,102,202,302,402,502) and forms a reverse pattern on the opposite side.

23. A method according to any one of claims 19 to 21 wherein the surface pattern is offset relative to a surface pattern applied to the opposite side of the compressed area (14,102,202,302,402,502).

24. A method according to any one of claims 19 to 21 wherein the surface pattern overlaps a surface pattern applied to the opposite side of the compressed area (14,102,202,302,402,502).

25. A method according to any one of claims 21 to 24 wherein the shaping process is assisted by applying an additional input of energy selected from the group comprising a higher pressure, heat, electromagnetic radiation and ultrasonics.

## Patentansprüche

1. Polymerschaumstoffgegenstand (10, 100, 200, 300, 400, 500), der ein auf den Gegenstand angewandtes Oberflächenmuster hat, **dadurch gekennzeichnet, dass** der Gegenstand einen elastisch komprimierbaren Schaumstoff aufweist, in dem das Oberflächenmuster geformt wird, wenn ein Bereich (14, 102, 202, 302, 402, 502) des Schaumstoffs unter Druck auf eine gewünschte Form verformt wird, derart, dass, wenn der Druck entfernt wird, der Gegenstand in der erwünschten Form geformt ist, wobei das Oberflächenmuster in dem verformten Bereich (14, 102, 202, 302, 402, 502) produziert ist.

2. Polymergegenstand nach Anspruch 1, wobei das Oberflächenmuster funktional ist.

3. Polymergegenstand nach Anspruch 1, wobei das Oberflächenmuster eine physikalische Eigenschaft des Gegenstands verändert.

4. Polymergegenstand nach Anspruch 3, wobei das Oberflächenmuster mindestens eines aus der Spannung, Steifheit, Festigkeit oder Flexibilität des Gegenstands verändert.

5. Polymergegenstand nach Anspruch 2, wobei das Oberflächenmuster eine visuelle Informationsanzeige bereitstellt oder aufweist.

6. Polymergegenstand nach einem der vorhergehenden Ansprüche, wobei das Oberflächenmuster während des Formgebungsvorgangs mit einem Former (19), der eine Kontaktfläche (19a-19j) hat, die angepasst ist, um das erwünschte Oberflächenmuster in dem komprimierten Polymermaterial bereitzustellen, angewandt wird.

7. Polymergegenstand nach einem der vorhergehenden Ansprüche, wobei das Oberflächenmuster in Bezug auf das benachbarte Polymermaterial erhöht ist.

8. Polymergegenstand nach einem der vorhergehenden Ansprüche, wobei der Polymerschaumstoff eine Dichte in einem Bereich von 20 bis 30 Kg/m³ hat.

9. Polymergegenstand nach einem der vorhergehenden Ansprüche, wobei der Polymerschaumstoff aus der Gruppe ausgewählt ist, die Polyurethan-, Polyolefin- und Polyesterschaumstoffmaterialien aufweist.

10. Polymergegenstand nach einem der vorhergehenden Ansprüche, wobei der komprimierte Bereich (14, 102, 202, 302, 402, 502) den Gegenstand mit erwünschten Eigenschaften für die beabsichtigte Anwendung des Gegenstands versieht.

11. Polymergegenstand nach Anspruch 10, wobei der komprimierte Bereich (14, 102, 202, 302, 402, 502) einen Drehachsenabschnitt formt, der sich entlang der Länge eines länglichen Streifens erstreckt, der als Abdeckmaterial verwendet werden soll, derart, dass sich ein zu dem Streifen benachbarter Abschnitt (12, 13, 101, 101', 201, 301, 301') sich in Bezug auf den komprimierten Bereich (14, 102, 202, 302, 402) drehen kann.

12. Polymergegenstand nach Anspruch 10, wobei der komprimierte Bereich (102, 102'; 202) eine Klappe (102, 102'; 202) bereitstellt, mittels der der Gegenstand (200) gegriffen werden kann, um die Handhabung des Gegenstands bei Gebrauch zu unterstützen.

13. Polymergegenstand nach einem der vorhergehenden Ansprüche, wobei aneinander angrenzende Bereiche (102, 102') entlang der Naht (103) trennbar sind.

14. Polymergegenstand nach einem der vorhergehenden Ansprüche, wobei zwei oder mehrere Gegenstände (11, 11'; 101, 101') zusammen geformt sind und lösbar durch eine Naht (18; 103) aneinander fixiert sind, die ermöglicht, dass die Gegenstände voneinander getrennt werden können.

15. Polymergegenstand nach einem der vorhergehenden Ansprüche, wobei eine Klappe (202) bereitgestellt ist, die durch eine Naht (203) mit dem Gegenstand verbunden ist, die ermöglicht, dass die Klappe (202) entfernt werden kann, nachdem der Gegenstand (200) ortsfest fixiert wurde.

16. Polymerschaumstoffgegenstand nach einem der vorhergehenden Ansprüche, **dadurch gekennzeichnet, dass** der Schaumstoffstreifen einen Klebestreifen (15) hat, um den Schaumstoffstreifen lösbar an einem der zwei bezüglich zueinander beweglichen Teile (1, 2) zu fixieren, um vorübergehend einen Spalt (3) zwischen den Teilen (1, 2) zu schließen.

17. Vorrichtung zur Herstellung des Polymerschaumstoffgegenstands aus Anspruch 1, **gekennzeichnet durch** das Bereitstellen von Mitteln (19a-19j) zur Komprimierung eines elastisch komprimierbaren Abschnitts des Schaumstoffs, um den Gegenstand in eine gewünschte Form zu formen, wobei ein Oberflächenmuster in einem Bereich (14, 102, 202, 302, 402, 502) des komprimierten Abschnitts produziert wird, der eine reduzierte Dicke besitzt, wenn der Gegenstand geformt wird.

18. Vorrichtung nach Anspruch 17, wobei das Komprimierungsmittel einen Former (19) aufweist, der eine Kontaktfläche (19a-19j) hat, um den Bereich (14, 102, 202, 302, 402, 502) mit reduzierter Dicke durch Komprimieren des Polymermaterials zu formen.

19. Verfahren zur Herstellung eines Gegenstands aus Polymerschaumstoffmaterial, das ein auf den Gegenstand angewandtes Oberflächenmuster hat, **gekennzeichnet durch** die Anwendung von Druck auf einen elastisch komprimierbaren Bereich (14, 102, 202, 302, 402, 502) des Polymerschaumstoffs, um den Bereich (14, 102, 202, 302, 402, 502) in eine gewünschte Form mit einem in dem ausgeformten Bereich (14, 102, 202, 302, 402, 502) geformten Oberflächenmuster während des Formgebungsvorgangs zu verformen, und Entfernen des Drucks, um den Gegenstand mit dem Oberflächenmuster zu formen.

20. Verfahren nach Anspruch 19, wobei das Oberflächenmuster durch Komprimieren des Polymermaterials geformt wird, derart, dass das Oberflächenmuster unter der benachbarten Oberfläche des komprimierten Bereichs (14, 102, 202, 302, 402, 502) eingelassen oder über diese erhöht ist.

21. Verfahren nach Anspruch 19 oder Anspruch 20, wobei das Oberflächenmuster durch eine Form gebende Matrize (19) produziert wird, die den komprimierten Bereich (14) formt, welche eine Kontaktfläche (19a-19j) hat, in der das Oberflächenmuster erhöht über oder eingelassen unter der Kontaktfläche liegt.

22. Verfahren nach einem der Ansprüche 19 bis 21, wobei das Oberflächenmuster auf eine Seite des komprimierten Bereichs (14, 102, 202, 302, 402, 502) angewandt wird und auf der entgegengesetzten Seite ein umgekehrtes Muster formt.

23. Verfahren nach einem der Ansprüche 19 bis 21, wobei das Oberflächenmuster bezüglich einem Oberflächenmuster, das auf der dem komprimierten Bereich (14, 102, 202, 302, 402, 502) entgegengesetzten Seite angewandt wird, versetzt ist.

24. Verfahren nach einem der Ansprüche 19 bis 21, wobei das Oberflächenmuster ein auf der entgegengesetzten Seite des komprimierten Bereichs (14, 102, 202, 302, 402, 502) angewandtes Oberflächenmuster überlappt.

25. Verfahren nach einem der Ansprüche 21 bis 24, wobei das Formgebungsverfahren durch das Anwenden einer zusätzlichen Energiezufuhr, die aus der Gruppe ausgewählt ist, die einen höheren Druck, Hitze, elektromagnetische Strahlung und Ultraschalltechnik aufweist, unterstützt wird.

## Revendications

1. Article en mousse polymère (10, 100, 200, 300, 400, 500) comportant un motif de surface appliqué sur l'article, **caractérisé en ce que** l'article comprend une mousse compressible de façon résiliente, dans lequel le motif de surface est formé quand une zone (14, 102, 202, 302, 402, 502) de la mousse est déformée sous pression pour produire une forme désirée de sorte que, quand la pression cesse d'être appliquée, l'article soit formé et présente la forme désirée avec le motif de surface produit dans la zone déformée (14, 102, 202, 302, 402, 502).

2. Article polymère selon la revendication 1, dans lequel le motif de surface est fonctionnel.

3. Article polymère selon la revendication 1, dans lequel le motif de surface modifie une propriété physique de l'article.

4. Article polymère selon la revendication 3, dans lequel le motif de surface modifie l'une au moins de la contrainte de l'article, la rigidité de l'article, la résistance de l'article, ou la flexibilité de l'article.

5. Article polymère selon la revendication 2, dans lequel le motif de surface fournit ou comprend une présentation visuelle d'informations.

6. Article polymère selon l'une quelconque des revendications précédentes, dans lequel le motif de surface est appliqué durant le procédé de formage avec un dispositif de formage (19) comportant une surface de contact (19a-19j) adaptée pour produire le motif de surface désiré dans le matériau polymère comprimé.

7. Article polymère selon l'une quelconque des revendications précédentes, dans lequel le motif de surface est surélevé par rapport au matériau polymère adjacent.

8. Article polymère selon l'une quelconque des revendications précédentes, dans lequel la mousse polymère a une densité entre 20 et 30 kg.m³.

9. Article polymère selon l'une quelconque des revendications précédentes, dans lequel la mousse polymère est sélectionnée dans le groupe comprenant les polyuréthanes, les polyoléfines et les matériaux en mousse polyester.

10. Article polymère selon l'une quelconque des revendications précédentes, dans lequel la zone comprimée (14, 102, 202, 302, 402, 502) apporte à l'article des propriétés désirées pour l'application à laquelle l'article est destiné.

11. Article polymère selon la revendication 10, dans lequel la zone comprimée (14, 102, 202, 302, 402, 502) forme une portion articulée qui s'étend le long de la longueur d'une bande allongée destinée à une utilisation comme matériau de masquage, de sorte qu'une portion adjacente (12, 13, 101, 101', 201, 301, 301') de la bande puisse pivoter par rapport à la zone comprimée (14, 102, 202, 302, 402).

12. Article polymère selon la revendication 10, dans lequel la zone comprimée (102, 102', 202) forme une languette (102, 102', 202) au moyen de laquelle on peut saisir l'article (200) pour faciliter la manipulation de l'article en cours d'utilisation.

13. Article polymère selon l'une quelconque des revendications précédentes, dans lequel les zones contiguës (102, 102') peuvent être séparées le long de la jonction (103).

14. Article polymère selon l'une quelconque des revendications précédentes, dans lequel deux articles ou plus (11, 11', 101, 101') sont formés ensemble et fixés les uns aux autres de façon amovible par une jonction (18, 103) permettant de séparer les articles les uns des autres.

15. Article polymère selon l'une quelconque des revendications précédentes, dans lequel une languette (202) est présente, laquelle est raccordée à l'article par une jonction (203) permettant de retirer la languette (202) après la fixation en place de l'article (200).

16. Article en mousse polymère selon l'une quelconque des revendications précédentes, **caractérisé en ce que** la bande de mousse comporte une bande adhésive (15) pour la fixation de façon amovible de la bande de mousse à l'une des deux parties capables d'être déplacées l'une par rapport à l'autre (1, 2) pour fermer temporairement un espace (3) entre les parties (1, 2).

17. Dispositif pour la fabrication de l'article en mousse polymère selon la revendication 1, **caractérisé par** la fourniture d'un moyen (19a-19j) de compression d'une portion compressible de façon résiliente de la mousse, pour former l'article en lui donnant une forme désirée avec un motif de surface produit dans une zone (14, 102, 202, 302, 402, 502) de la portion comprimée qui a une épaisseur réduite quand l'article est formé.

18. Dispositif selon la revendication 17, dans lequel le moyen de compression comprend un dispositif de formage (19) comportant une surface de contact (19a-19j) pour le formage de la zone (14, 102, 202, 302, 402, 502) d'épaisseur réduite par compression du matériau polymère.

19. Procédé de fabrication d'un article constitué d'un matériau en mousse polymère comportant un motif de surface appliqué sur l'article, **caractérisé par** l'application de pression sur une zone compressible de façon résiliente (14, 102, 202, 302, 402, 502) de la mousse polymère pour déformer la zone (14, 102, 202, 302, 402, 502) afin de produire une forme désirée avec un motif de surface formé dans la zone formée (14, 102, 202, 302, 402, 502) durant le procédé de formage et la cessation d'application de la pression pour former l'article avec le motif de surface.

20. Procédé selon la revendication 19, dans lequel le motif de surface est formé par compression du matériau polymère de sorte que le motif de surface soit enfoncé en dessous de, ou surélevé au-dessus de, la surface adjacente de la zone comprimée (14, 102, 202, 302, 402, 502).

21. Procédé selon la revendication 19 ou la revendication 20, dans lequel le motif de surface est produit par une matrice de formage (19) formant la zone comprimée (14) comportant une surface de contact (19a-19j), dans lequel le motif de surface est surélevé au-dessus de, ou enfoncé en dessous de, la surface de contact.

22. Procédé selon l'une quelconque des revendications 19 à 21, dans lequel le motif de surface est appliqué sur un côté de la zone comprimée (14, 102, 202, 302, 402, 502) et forme un motif inverse sur le côté opposé.

23. Procédé selon l'une quelconque des revendications 19 à 21, dans lequel le motif de surface est décalé par rapport à un motif de surface appliqué sur le côté opposé de la zone comprimée (14, 102, 202, 302, 402, 502).

24. Procédé selon l'une quelconque des revendications 19 à 21, dans lequel le motif de surface chevauche un motif de surface appliqué sur le côté opposé de la zone comprimée (14, 102, 202, 302, 402, 502).

25. Procédé selon l'une quelconque des revendications 21 à 24, dans lequel le procédé de formage est assisté par l'application d'un apport additionnel d'énergie sélectionné dans le groupe comprenant une pression plus élevée, la chaleur, un rayonnement électromagnétique et les ultrasons.
